# NEUE EUROPÄISCHE PATENTSCHRIFT

(11) **EP 1 615 861 B2**
(45) Veröffentlichungstag und Bekanntmachung des Hinweises auf die Entscheidung über den Einspruch: **12.06.2013**
(45) Hinweis auf die Patenterteilung: 02.08.2006
(21) Anmeldenummer: 04717101.2
(22) Anmeldetag: 04.03.2004
(51) Int. Cl.: C04B 28/02, C04B 40/00

(54) **REDISPERSIONSPULVER-ZUSAMMENSETZUNG MIT ABBINDEBESSCHLEUNIGENDER WIRKUNG**
REDISPERSION POWDER COMPOSITION WITH A BINDING ACCELERATION EFFECT
COMPOSITION DE POUDRE DE REDISPERSION AYANT UN EFFET D'ACCELERATION DE DURCISSEMENT

(30) Priorität: 17.04.2003 DE 10317882
(43) Veröffentlichungstag der Anmeldung: 18.01.2006
(73) Patentinhaber: Wacker Chemie AG, 81737 München (DE)
(72) Erfinder: Weitzel, Hans-Peter, 84571 Reischach (DE); Lutz, Hermann, 84547 Emmerting (DE); Fritze, Peter, 84533 Haiming (DE)
(74) Vertreter: Schuderer, Michael
(86) Internationale Anmeldenummer: PCT/EP2004/002210
(87) Internationale Veröffentlichungsnummer: WO 2004/092094

(56) Entgegenhaltungen:
- DE-A- 19 531 515
- US-A- 3 303 147
- US-A- 5 753 733
- "CHEMICAL ABSTRACTS + INDEXES, AMERICAN CHEMICAL SOCIETY. COLUMBUS, US" , CHEMICAL ABSTRACTS + INDEXES, AMERICAN CHEMICAL SOCIETY. COLUMBUS, US XP000494034 ISSN: 0009-2258 Zusammenfassung

## Beschreibung

Die Erfindung betrifft die Verwendung von in Wasser redispergierbaren Polymerpulver-Zusammensetzungen mit abbindebeschleunigender Wirkung in hydraulisch abbindenden Systemen.

Polymerisate auf Basis von Vinylester, Vinylchlorid, (Meth)-acrylatmonomeren, Styrol, Butadien und Ethylen werden vor allem in Form deren wässriger Dispersionen oder in Wasser redispergierbarer Polymerpulver in vielerlei Anwendungen, beispielsweise als Beschichtungsmittel oder Klebemittel für die unterschiedlichsten Substrate eingesetzt. Zur Stabilisierung dieser Polymerisate werden Schutzkolloide oder niedermolekulare oberflächenaktive Verbindungen eingesetzt. Als Schutzkolloide werden in der Regel Polyvinylalkohole eingesetzt.

Diese Produkte finden insbesondere Verwendung als Bindemittel in hydraulisch abbindenden Klebstoffen wie in Fliesenklebern auf Basis von Zementen oder Gips.

Der Werkstoff Beton ist ein sehr vielseitiger Werkstoff dessen Eigenschaften durch eine Vielzahl von Parametern gesteuert werden können. Wichtige Eigenschaften sind unter anderem die Verarbeitbarkeit über die Zeit und die Festigkeit (Früh- und Endfestigkeit) des Betons. Durch die ablaufende Hydratation der Masse nimmt die Verarbeitbarkeit mit der Zeit ab. Um diesem Effekt entgegenzusteuern kann entweder mehr Wasser oder sogenannter Verflüssiger bzw. Superplasticizer zugesetzt werden. Beides führt aber dazu, dass Anfangs- und Endfestigkeit des Betons nachteilig beeinflusst werden. Um diese Nachteile zu kompensieren werden sogenannte Beschleuniger oder Frühfestigkeitsentwickler zugesetzt, die zu einer höheren Anfangs- und Endfestigkeit führen.

In der EP-A 1136507 werden tertiäre Alkanolamine als dem Fachmann schon lange bekannte Beschleuniger beschrieben. Nachteilig ist, dass diese Verbindungen sehr aktive Nukleophile sind und daher die Estergruppen im meist eingesetzten kunststoffhaltigen Bindemittel, auf Basis von Vinylacetat-Ethylen- oder Styrol-Acrylsäureester-Mischpolymerisaten, verseifen und die Wirksamkeit der Bindemittel zerstören. In der EP- A 1136507 werden die Alkanolamine daher aufwendig an ein Polymerrückgrat angebunden.

Die EP-A 1167317 beschreibt die Verwendung von Alkalihydroxiden, Alkalicarbonaten, Erdalkalichloriden und insbesondere von Aluminiumsalzen als Abbinde- und Erhärtungsbeschleuniger für Beton. Nachteilig bei der Beschleunigung der Zementabbindung mittels dieser Verbindungen ist allerdings die Abnahme der mechanischen Festigkeit.

Es bestand daher die Aufgabe, ein Mittel zur Beschleunigung der Abbindung von hydraulisch abbindenden Systemen zur Verfügung zu stellen, welches die Nachteile des Stands der Technik vermeidet und zu verbesserter Festigkeit im ausgehärteten Mörtel führt.

Gegenstand der Erfindung ist die Verwendung von in Wasser redispergierbaren Polymerpulver-Zusammensetzungen auf der Basis von a) Homo- oder Mischpolymerisaten von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, einem oder mehreren Schutzkolloiden, gegebenenfalls Antiblockmittel zur Beschleunigung der Abbindung von bauchemischen Produkten mit hydraulisch abbindenden Bindemitteln, dadurch gekennzeichnet, dass b) ein oder mehrere Verbindungen aus der Gruppe umfassend Lithium-, Natrium-, Kalium-, Magnesium- und Calciumsalze mit einem organischen Gegenion aus der Gruppe umfassend Carboxylatgruppen, welche sich von Carbonsäuren mit 1 bis 4 C-Atomen ableiten, enthalten sind.

Bevorzugte organische Gegenionen sind Formiat-, Acetat-, Propionat- und Butyrat-Ion. Besonders bevorzugt werden die Calciumsalze. Am meisten bevorzugt werden die Calciumsalze von Carbonsäuren mit 1 bis 4 C-Atomen, wie Calciumformiat, Calciumacetat.

Für das Basispolymerisat geeignete Vinylester sind solche von Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9R oder VeoVa10R (Handelsnamen der Firma Shell). Besonders bevorzugt ist Vinylacetat.

Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat.

Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Gegebenenfalls können noch 0.05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri-(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Beispiele für geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate; Mischpolymerisate von Vinylacetat mit 1 bis 40 Gew.-% Ethylen;
Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11;
Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und
Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Mischpolymerisate mit Vinylacetat, 1 bis 40 Gew.-% Ethylen und 1 bis 60 Gew.-% Vinylchlorid; wobei
die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat;
Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat;
Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen;
Styrol-1,3-Butadien-Copolymerisate;
wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Homo- und Mischpolymerisate erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im allgemeinen 40°C bis 100°C, vorzugsweise 60°C bis 90°C beträgt. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.001 bis 0.02 Gew.-%, vorzugsweise 0.001 bis 0.01 Gew.-%, jeweils bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0.001 bis 0.03 Gew.-%, vorzugsweise 0.001 bis 0.015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Geeignete Schutzkolloide sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)-acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015). Die genannten Schutzkolloide sind mittels dem Fachmann bekannter Verfahren zugänglich und werden im allgemeinen in einer Menge von insgesamt 1 bis 20 Gew.-%, bezogen auf das Gesamtgewicht der Monomere, bei der Polymerisation zugesetzt.

Wird in Gegenwart von Emulgatoren polymerisiert, beträgt deren Menge 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen
oder Alkylphenolen, oder nichtionische Tenside wie Alkylpolyglykolether oder Alkylarylpolyglykolether mit 8 bis 40 Ethylenoxid-Einheiten.

Nach Abschluß der Polymerisation kann zur Restmonomerentfernung in Anwendung bekannter Methoden nachpolymerisiert werden, im allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen haben einen Feststoffgehalt von 30 bis 75 Gew.-%, vorzugsweise von 50 bis 60 Gew.-%.

Zur Herstellung der in Wasser redispergierbaren Polymerpulver werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe (Schutzkolloid) in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll 3 bis 30 Gew.-%, bezogen auf den Polymeranteil betragen; bevorzugt werden 5 bis 20 Gew.-%, bezogen auf den Polymeranteil eingesetzt.

Geeignete Verdüsungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)-acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Verdüsungshilfe eingesetzt, wobei die als Schutzkolloide bevorzugten Polyvinylalkohole auch bevorzugt als Verdüsungshilfe eingesetzt werden.

Bei der Verdüsung hat sich vielfach ein Gehalt von bis zu 1.5, Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzüngen sind beispielsweise Pigmente, Füllstoffe, Schaumstabilisatoren, Hydrophobierungsmittel.

Zur Herstellung der Polymerpulver-Zusammensetzung wird die abbindebeschleunigende Komponente unmittelbar vor der Sprühtrocknung zur entsprechenden Polymerdispersion zugegeben und anschließend verdüst. Gegegebenenfalls kann die abbindebeschleunigende Komponente auch nach der Trocknung in Pulverform zugegeben werden. Vorzugsweise enthält das Redispersionspulver 1 bis 20 Gew.-%, besonders bevorzugt 3 bis 15 Gew.-% der abbindebeschleunigenden Komponente, jeweils bezogen.auf das Gesamtgewicht der Polymerpulver-Zusammensetzung.

Die in Wasser redispergierbaren Polymerpulver-Zusammensetzungen können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Bevorzugte Anwendungsgebiete sind Spritzmörtel und Spritzbeton für Bauwerke des Hoch- und Tiefbaues sowie der Auskleidung von Tunnelwänden.

Mit der erfindungsgemäßen Verwendung erhält man Additive, welche die Zementabbindung wirksam beschleunigen, ohne dass die mechanische Festigkeit des fertigen Mörtels abnimmt. Darüberhinaus hat der Anwender den Vorteil, dass er an der Baustelle, bei Modifizierung des Mörtels mit Redispersionspulver, eine Komponente weniger handhaben muß.

### Beispiele:

### Dispersion:

Als Dispersion wird eine polyvinylalkoholstabilisierte Dispersion eines Copolymeren aus Vinylacetat und Ethylen verwendet. Die Herstellung erfolgt nach dem Fachmann bekannten Methoden der Emulsionspolymerisation. Zur Stabilisierung wurden 10 Gew.-% einer Polyvinylalkoholes mit einem Verseifungsgrad von 88 Mol-% und einer Viskosität nach Höppler von 4 mPas verwendet. Die Copolymerzusammensetzung betrug 92 Gew.-% Vinylacetat und 8 Gew.%-Ethylen.

### Pulver:

Die Pulver wurden durch Sprühtrocknung der genannten Dispersion unter Zusatz des jeweiligen Beschleunigers und 8 Gew.-% eines Polyvinylalkoholes mit einem Verseifungsgrad von 88 Mol-% und einer Viskosität nach Höppler von 4 mPas hergestellt.

Die Dispersion wurde dann mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 Gew.-% handelsüblichem Antiblockmittel (Calcium-Magnesium-Carbonat) versetzt.

### Beschleuniger:

CaAc = Calciumacetat
CaFo = Calciumformiat
CaNi = Calciumnitrat (Vergleich)
AmSu = Ammoniumaluminiumsulfat (Vergleich)
AlSu = Aluminiumsulfat (Vergleich)
AlAc = Aluminiumacetat (Vergleich)
CaPh = Calciumphosphat (Vergleich)
LiCo = Lithiumcarbonat (Vergleich)
NaAc = Natriumacetat
NaFo = Natriumformiat
KAc = Kaliumacetat
KFo = Kaliumformiat
LiAc = Lithiumacetat

### Ausprüfung:

Die erhaltenen Pulver wurden auf ihre Pulvereigenschaften und auf die Wirksamkeit des Beschleunigers im Beton überprüft.

### Rieselfähigkeit RF:

Die Rieselfähigkeit wurde nur optisch über die Ausbildung des Schüttkegels beurteilt.

### Bestimmung der Blockfestigkeit BF:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
1-3 = sehr gute Blockstabilität
4-6 = gute Blockstabilität
7-8 = befriedigende Blockstabilität
9-10 = nicht blockstabil, Pulver nach Zerdrücken nicht mehr rieselfähig.

### Bestimmung des Absitzverhaltens RA:

Das Absitzverhalten der Redispersion dient als Maß für die Redispergierbarkeit der Pulvers. Die Redispersionen wurden 50 %-ig in Wasser durch Einwirkung von starken Scherkräften erzeugt.
Das Absitzverhalten wurde dann an verdünnten Redispersionen (0.5 % Festgehalt) bestimmt, und dazu 100 ml dieser Dispersion in eine graduierte Röhre gefüllt, und die Absitzhöhe an Feststoff gemessen. Die Angabe erfolgt in mm Absitz nach 24 Stunden. Werte größer 7 zeigen eine unzureichende Redispersion des Pulvers an.

Die Ergebnisse der Prüfung der Rieselfähigkeit RF, der Blockfestigkeit BF und des Absitzverhaltens RA der Redispersionspulver sind in Tabelle 1 zusammengefasst.

Bestimmung der Haftzugfestigkeiten eines mit den Redispersionspulvern modifizierten, zementären Fliesenklebers:

Die Haftzugfestigkeiten im Fliesenkleber wurden in folgender Rezeptur überprüft (3 % Polymeranteil):

| | |
|---|---|
| Quarzsand | 565 Teile |
| Portlandzement | 400 Teile |
| Cellulose | 5 Teile |
| Redispersionspulver | 30 Teile |

Es wurden die Haftzugfestigkeiten nach 3 Lagerbedingungen bestimmt:

| | |
|---|---|
| 28T: | 28 Tage Trockenlagerung |
| 7T/21N: | 7 Tage trocken/21 Tage nass (Nasslagerung) |
| 14T/14TS+70°C/1T: | Wärmelagerung |

Die Ergebnisse dieser Prüfung sind in Tabelle 2 zusammengefasst.

**Tabelle 1:**

| Beispiel | Additiv | Menge Gew.% | RF | BF | RA |
|---|---|---|---|---|---|
| 1 | CaAc | 10 | gut | 2 | 0.3 |
| 2 | CaAc | 5 | gut | 2.5 | 0.4 |
| V3 | CaNi | 5 | gut | 2.5 | 0.8 |
| 4 | CaFo | 10 | gut | 2.5 | 0.5 |
| V5 | CaNi | 10 | gut | 2.5 | 0.4 |
| 6 | CaFo | 5 | gut | 2.5 | 0.8 |
| V7 | AmSu | 5 | gut | 2 | 3.8 |
| V8 | AlSu | 10 | gut | 5 | 6.5 |
| V9 | AlAc | 5 | gut | 3.5 | 4 |
| 10 | CaFo | 10 | gut | 2.5 | 0.4 |
| 11 | CaAc | 10 | gut | 2 | 0.8 |
| 12 | CaFo | 10 | gut | 2.5 | 1.8 |
| 13 | CaAc | 10 | gut | 2.5 | 0.2 |
| V14 | CaPh | 5 | gut | 2 | 1.3 |
| V15 | LiCo | 10 | gut | 2 | 0.2 |
| 16 | NaAc | 5 | gut | 2 | 0.2 |
| 17 | NaAc | 10 | gut | 2 | 0.2 |
| 18 | NaFo | 5 | gut | 2.5 | 0.3 |
| 19 | KAc | 5 | gut | 3 | 0.4 |
| 20 | KFo | 5 | gut | 3 | 0.9 |
| 21 | KFo | 10 | gut | 3 | 0.2 |
| 22 | NaFo | 10 | gut | 2.5 | 0.1 |
| 23 | LiAc | 10 | gut | 4 | 0.1 |
| V24 | ohne | 0 | gut | 4 | 0.5 |

Aus den Daten ist zu erkennen, dass die Pulvereigenschaften bei Modifizierung mit den erfindungsgemäßen Additiven nicht negativ beeinflusst werden, im Gegensatz bei Modifizierung gemäß der Vergleichsbeispiele 7 bis 9. Rieselfähigkeit, Blockstabilität und Redispergierbarkeit bleiben im wesentlichen unverändert.

**Tabelle 2:**

| Beispiel | 28T | 7T/21N | 14T/14TS+70/1T |
|---|---|---|---|
| | N/mm² | N/mm² | N/mm² |
| 1 | 1.98 | 0.63 | 1.42 |
| 2 | 1.89 | 0.62 | 1.46 |
| V3 | 1.82 | 0.64 | 1.7 |
| 4 | 1.95 | 0.77 | 1.57 |
| V5 | 2.01 | 0.63 | 1.58 |
| 6 | 1.96 | 0.62 | 1.47 |
| V7 | 2.13 | 0.64 | 1.46 |
| V8 | 1.77 | 0.81 | 1.57 |
| V9 | 1.84 | 0.66 | 1.51 |
| 10 | 1.84 | 0.84 | 1.64 |
| 11 | 1.91 | 0.83 | 1.6 |
| 12 | 2.11 | 0.83 | 1.51 |
| 13 | 2.04 | 0.78 | 1.44 |
| V14 | 1.53 | 0.72 | 1.39 |
| V15 | 1.79 | 0.78 | 1.40 |
| 16 | 1.66 | 0.87 | 1.49 |
| 17 | 1.83 | 0.80 | 1.40 |
| 18 | 1.97 | 0.83 | 1.39 |
| 19 | 1.66 | 0.68 | 1.37 |
| 20 | 1.65 | 0.72 | 1.47 |
| 21 | 1.7 | 0.71 | 1.42 |
| 22 | 1.95 | 0.83 | 1.76 |
| 23 | 2.04 | 0.64 | 1.50 |
| V24 | 1.63 | 0.57 | 1.36 |

Die positive Auswirkung auf die Haftzugfestigkeit, insbesondere nach Nasslagerung, sind deutlich sichtbar.

## Patentansprüche

1. Verwendung von in Wasser redispergierbareMPolymerpulver-Zusammensetzungen auf der Basis von a) Homo- oder Mischpolymerisaten von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhafogenide, einem oder mehreren Schutzkolloiden, gegebenenfalls Antiblockmittel zur Beschleunigung der Abbindung von bauchemischen Produkten mit hydraulisch abbindenden Bindemitteln , **dadurch gekennzeichnet, dass** b) ein oder mehrere Verbindungen aus der Gruppe umfassend Lithium-, Natrium-, Kalium-, Magnesium- und Calciumsalze mit einem organischen Gegenion aus der Gruppe umfassend Carboxylatgruppen, welche sich von Carbonsäuren mit 1 bis 4 C-Atomen ableiten, enthalten sind.

2. Verwendung nach Anspruch 1, **dadurch gekennzeichnet, dass** ein oder mehrere Calciumsalze von Carbonsäuren mit 1 bis 4 C-Atomen enthalten sind.

3. Verwendung nach Anspruch 1 bis 2, **dadurch gekennzeichnet, dass** als Homo- oder Mischpolymerisate Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolyme-risate von Vinylacetat mit Ethylen und Vinylchlorid, Styrol-Acrylsäureester-Copolymensate, Styrol-1,3-Butadien-Copolymerisate, eingesetzt werden.

4. Verwendung nach Anspruch 1 bis 3, **dadurch gekennzeichnet, dass** als Schutzkolloid teilverseifte oder vollverseifte, gegebenenfalls hydrophob modifizierte, Polyvinylalkohole mit einem Hydrolysegrad von 80 bis 100 Mol% und einer Höpplerviskosität, in 4 %-iger wässriger Lösung von 1 bis 30 mPas (Methode nach Höppler bei 20°C, DIN 53015), eingesetzt werden.

5. Verwendung nach Anspruch 1 bis 4, **dadurch gekennzeichnet, dass** die abbindebeschleunigende Komponente b) in einer Menge von 1 bis 20 Gew.-%, bezogen auf das Gesamtgewicht der Pulver-Zusammensetzung, enthalten ist.

6. Verwendung nach Anspruch 1 bis 5 für die Herstellung von Baukleber, Fliesenkleber und Vollwärmeschutzkleber, Putzen, Spachtelmassen, Fußbodenspachtelmassen, Verlaufsmassen, Dichtschlämmen, Fugenmörtel und Farben.

7. Verwendung nach Anspruch 1 bis 5 für Spritzmörtel und Spritzbeton für Bauwerke des Hoch- und Tiefbaues sowie der Auskleidung von Tunnelwänden.

## Claims

1. Use of water-redispersible polymer powder compositions based on a) homo- or copolymers of one or more monomers from the group consisting of vinyl esters of unbranched or branched alkylcarboxylic acids having from 1 to 15 carbon atoms, methacrylic esters and acrylic esters of alcohols having from 1 to 15 carbon atoms, vinylaromatics, olefins, dienes, and vinyl halides, on one or more protective colloids, and, where appropriate, antiblocking agent for accelerating the setting of construction chemistry products comprising hydraulically setting binders, **characterized in that** b) one or more compounds from the group consisting of lithium salts, sodium salts, potassium salts, magnesium salts and calcium salts is/are present with an organic counterion from the group consisting of carboxylate groups which derive from carboxylic acids having from 1 to 4 carbon atoms.

2. Use according to Claim 1, **characterized in that** one or more calcium salts of carboxylic acids having 1 to 4 carbon atoms are present.

3. Use according to either of Claims 1 and 2, **characterized in that** the homo- or copolymers used comprise vinyl acetate homopolymers, copolymers of vinyl acetate with ethylene, copolymers of vinyl acetate with ethylene and with one or more other vinyl esters, copolymers of vinyl acetate with ethylene and acrylic ester, copolymers of vinyl acetate with ethylene and vinyl chloride, styrene-acrylic ester copolymers, styrene-1,3-butadiene copolymers.

4. Use according to any of Claims 1 to 3, **characterized in that** the protective colloid used comprises partially hydrolysed or fully hydrolysed, where appropriate hydrophobicized, polyvinyl alcohols having a degree of hydrolysis of from 80 to 100 mol% and having a Höppler viscosity of from 1 to 30 mPas in 4% strength aqueous solution (Höppler method at 20°C, DIN 53015).

5. Use according to any of Claims 1 to 4, **characterized in that** the amount present of the setting-accelerator component b), based on the total weight of the powder composition, is from 1 to 20% by weight.

6. Use according to any of Claims 1 to 5 for the production of construction adhesives, tile adhesive, exterior insulation system adhesive, plasters and renders, trowelling compositions, floor-filling compositions, self-leveling compositions, sealing slurries, jointing mortars, or paints.

7. Use according to any of Claims 1 to 5 for spray mortar or spray concrete for construction work in civil or structural engineering, or else in the lining of tunnel walls.

## Revendications

1. Utilisation de compositions de poudres de polymères redispersibles dans l'eau, à base de a) homo- ou copolymères d'un ou plusieurs monomères du groupe comprenant des esters vinyliques d'acides alkylcarboxyliques non ramifiés ou ramifiés comportant de 1 à 15 atomes de C, d'esters d'acide méthacrylique et d'esters d'acide acrylique d'alcools comportant de 1 à 15 atomes de C, de vinylaromatiques, d'oléfines, de diènes et d'halogénures de vinyle, d'un ou plusieurs colloïdes protecteurs, éventuellement d'agents antibloquants, pour l'accélération du durcissement de produits chimiques pour matériaux de construction comportant des liants à durcissement hydraulique, **caractérisée en ce que** b) elles contiennent un ou plusieurs composés du groupe comprenant des sels de lithium, de sodium, de potassium, de magnésium et de calcium avec un contre-ion organique du groupe comprenant des groupes carboxylate dérivés d'acides carboxyliques comprenant de 1 à 4 atomes de C.

2. Utilisation suivant la revendication 1, **caractérisée par** la présence d'un ou plusieurs sels de calcium d'acides carboxyliques comprenant de 1 à 4 atomes de C.

3. Utilisation suivant la revendication 1 ou 2, **caractérisée en ce que** l'on met en oeuvre, en tant qu'homo- ou copolymères, des homopolymères d'acétate de vinyle, des copolymères d'acétate de vinyle et d'éthylène, des copolymères d'acétate de vinyle avec de l'éthylène et un ou plusieurs autres esters vinyliques, des copolymères d'acétate de vinyle avec de l'éthylène et des esters d'acide acrylique, des copolymères d'acétate de vinyle avec de l'éthylène et du chlorure de vinyle, des copolymères de styrène - acide acrylique, des copolymères de styrène - 1,3-butadiène.

4. Utilisation suivant les revendications 1 à 3, **caractérisée en ce que** l'on met en oeuvre en tant que colloïdes protecteurs, des poly(alcools vinyliques) partiellement saponifiés ou totalement saponifiés, éventuellement à hydrophobie modifiée, d'un degré d'hydrolyse de 80 à 100% molaires et d'une viscosité Hôppler, en solution aqueuse à 4%, de 1 à 30 mPas (méthode selon Höppler à 20°C, DIN 53015).

5. Utilisation suivant les revendications 1 à 4, **caractérisée par** la présence du composant b) accélérant le durcissement en une quantité de 1 à 20% en poids, par rapport au poids total de la composition de poudre.

6. Utilisation suivant les revendications 1 à 5 pour la préparation d'adhésifs pour matériaux de construction, d'adhésifs pour carrelages et d'adhésifs pour isolation thermique totale, d'enduits, de mastics, de bouche-pores pour sols, de masses de nivellement, de badigeons d'étanchéité, de mortiers de jointoiement et de colorants.

7. Utilisation suivant les revendications 1 à 5 pour des mortiers d'injection et des bétons d'injection pour ouvrages de génie civil, ainsi que pour l'habillage de parois de tunnels.
